# EUROPÄISCHE PATENTSCHRIFT

(11) **EP 0 595 078 B1**
(45) Veröffentlichungstag und Bekanntmachung des Hinweises auf die Patenterteilung: **16.04.1997**
(21) Anmeldenummer: 93116133.5
(22) Anmeldetag: 06.10.1993
(51) Int. Cl.: C01G 23/00, C01G 23/07, C01B 13/22, C04B 35/46, B01J 23/00, A61K 7/00

(54) **Flammenhydrolytisch hergestelltes Titandioxid-Mischoxid, Verfahren zu seiner Herstellung und Verwendung**
Titandioxide mixed oxide prepared by flame hydrolysis, process for its preparation and its use
Oxyde mixte à base de dioxyde de titane préparé hydrolyse à la flamme, procédé pour sa préparation et son utilisation

(30) Priorität: 24.10.1992 DE 4235996
(43) Veröffentlichungstag der Anmeldung: 04.05.1994
(73) Patentinhaber: Degussa Aktiengesellschaft, 60311 Frankfurt (DE)
(72) Erfinder: Hartmann, Werner, Dr., D-64832 Babenhausen (DE); Mangold, Helmut, Dr., D-63517 Rodenbach (DE); Kerner, Dieter, Dr., D-63450 Hanau (DE)

(56) Entgegenhaltungen:
- EP-A- 0 241 647
- FR-A- 2 339 569
- GB-A- 707 560
- DATABASE WPI Derwent Publications Ltd., London, GB; AN 84-145826 & SU-A-1 044 599 (PHYS CHEM INST DES)
- DATABASE WPI Derwent Publications Ltd., London, GB; AN 84-145826 & SU-A-1 044 599

## Beschreibung

Die Erfindung betrifft flammenhydrolytisch hergestelltes Titandioxid-Mischoxid, das Verfahren zu seiner Herstellung und seine Verwendung.

Es ist bekannt, Titandioxid-Mischoxid auf hydrolytischem Wege in der Gasphase herzustellen. So wird in der DE-A 9 52 891 ein Verfahren zur Herstellung von Mischoxiden von Aluminium und Titan oder Titan und Silicium beschrieben, bei welchem eine Spalttemperatur im Bereich zwischen 250 und 650 °C eingehalten wird.

Die DE-A 29 31 810 beschreibt ein auf flammenhydrolytischem Wege hergestelltes Siliciumdioxid-Titandioxid-Mischoxid, welches 99,9 bis 91,1 Gew.-% Siliciumdioxid und 0,1 bis 9,9 Gew.-% Titandioxid enthält.

Die DE-A 36 11 449 beschreibt ein flammenhydrolytisch hergestelltes Aluminiumoxid-Titandioxid-Mischoxid, welches 56 Gew.-% Aluminiumoxid und 44 Gew.-% Titandioxid enthält.

Gegenstand der Erfindung ist ein flammenhydrolytisch hergestelltes Titandioxid-Mischoxid mit einer BET-Oberfläche von 10 bis 150 m²/g, welches 1 bis 30 Gew.-% Aluminiumoxid oder 1 bis 30 Gew.-% Siliciumdioxid als Bestandteil des Mischoxides enthält.

In einer bevorzugten Ausführungsform der Erfindung kann das Titandioxid-Mischoxid die folgenden physikalisch-chemischen Kenndaten aufweisen:

| | | |
|---|---|---|
| Al₂O₃-Gehalt | (Gew.-%) | 1 - 30 |
| SiO₂-Gehalt | (Gew.-%) | 1 - 30 |
| Spezifische Oberfläche | (m²/g) | 10 - 150 |
| Primärteilchengröße | (nm) | 5 - 100 |
| Stampfdichte | (g/l) | 50 - 400 |
| Glühverlust (2 h bei 1000 °C) | (Gew.-%) | 0,5 - 5 |
| Chloridgehalt | (Gew.-%) | < 1 |
| Rutilgehalt | (%) | 20 - 90 |

Ein weiterer Gegenstand der Erfindung ist ein Verfahren zur Herstellung des flammenhydrolytisch hergestellten Titandioxid-Mischoxides nach Anspruch 1, welches dadurch gekennzeichnet ist, daß man wasserfreies Aluminiumchlorid oder Siliciumtetrachlorid verdampft, zusammen mit einem Inertgas, z. B. Stickstoff, in die Mischkammer eines bekannten Brenners überführt, dort mit Wasserstoff, Luft und gasförmigem Titantetrachlorid in einem derartigen Verhältnis, daß das entsprechend zusammengesetzte Al₂O₃/TiO₂-Mischoxid oder SiO₂/TiO₂-Mischoxid ergibt, vermischt, das 4-Komponentengemisch in einer Reaktionskammer verbrennt, danach das feste Titandioxid-Mischoxid von den gasförmigen Reaktionsprodukten abtrennt und gegebenenfalls in feuchter Luft von anhaftendem Chlorwasserstoff befreit.

Die erfindungsgemäße flammenhydrolytische Umsetzung kann bei Temperaturen von 1000 bis 3000 °C durchgeführt werden.

Das erfindungsgemäße Titandioxid-Mischoxid kann zur Herstellung von Katalysatoren, Katalysatorträgern, Photokatalysatoren, Keramiken, Autolacken und kosmetischen Artikeln (insbesondere als UV-Absorber in Sonnenschutzmitteln) und als Hitzestabilisator in Siliconkautschuken eingesetzt werden.

Das erfindungsgemäße Titandioxid-Mischoxid weist vorteilhafterweise eine höhere Temperaturbeständigkeit der Oberfläche auf. Es ist feinteilig, sehr homogen, sehr rein und weist eine hohe Dispergierbarkeit auf.

### Beispiele

AlCl₃ und TiCl₄ oder SiCl₄ und TiCl₄ werden in zwei getrennten Verdampfern verflüchtigt (Verdampfertemperaturen: AlCl₃ 250 °C, SiCl₄ 100 °C, TiCl₄ 200 °C) und die Chloriddämpfe mittels Stickstoff in die Mischkammer eines Brenners geleitet. Dort werden sie mit Wasserstoff und getrockneter Luft und/oder Sauerstoff vermischt und in einer Reaktionskammer verbrannt. In der Koagulationsstrecke werden die Reaktionsprodukte auf etwa 110 °C abgekühlt. Die Mischoxide werden anschließend mit einem Filter abgeschieden. Durch eine Behandlung der Pulver mit feuchter Luft bei Temperaturen zwischen 500 und 700 °C wird anhaftendes Chlorid entfernt.

In den Tabellen 1 und 2 sind die Reaktionsbedingungen und die Produkteigenschaften für verschiedene Mischoxide zusammengestellt.

### Temperaturbeständigkeit der spezifischen Oberfläche

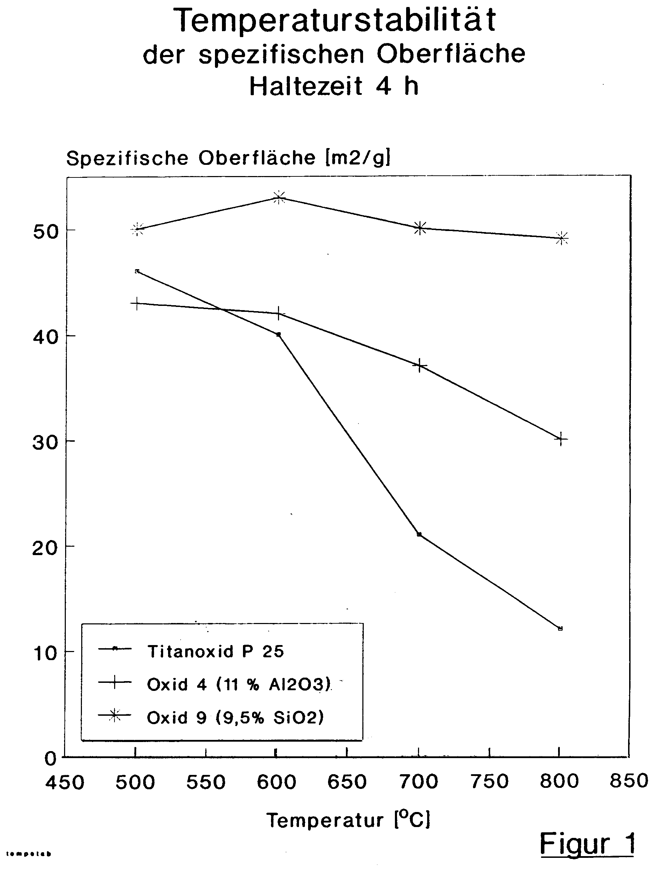

Beispielhaft wurde die spezifische Oberfläche der Mischoxide 4 und 9 nach einer Kalzination bei Temperaturen zwischen 500 und 800 °C bestimmt. Die Haltezeit betrug jeweils 4 Stunden. Als Vergleichsmaterial wurde das undotierte pyrogene Titanoxid P 25 (BET 50 m²/g) verwendet. Die Ergebnisse sind in Figur 1 dargestellt.
- Die spezifische Oberfläche von P 25 bricht ab 600 °C stark ein.
- Die Dotierung mit Aluminiumoxid liefert ein Material mit deutlich stabilerer Oberfläche (800 °C: 30 m²/g anstatt 12 m²/g bei P 25)
- Durch Zusatz von Siliciumdioxid wird ein Pulver erhalten, dessen Oberfläche über den untersuchten Temperaturbereich stabil ist.

Die neuen Materialien können bei hohen Temperaturen eingesetzt werden und sind somit besonders für die Herstellung von Katalysatoren und Katalysatorträgern geeignet.

**Tabelle 1**

| Al₂O₃/TiO₂-Mischoxide | | | | | | | | | |
|---|---|---|---|---|---|---|---|---|---|
| Nr. | TiCl₄ (g/h) | AlCl₃ (g/h) | H₂ (l/h) | Luft (l/h) | Al₂O₃ (%) | BET (m²/g) | Stampfdichte (g/l) | Glühverlust (%) | Chloridgehalt (%) |
| 1 | 264 | 19 | 236 | 1643 | 6,1 | 98 | 159 | 1,6 | 0,06 |
| 2 | 236 | 50 | 236 | 1643 | 16,2 | 103 | 145 | 1,7 | 0,15 |
| 3 | 1466 | 114 | 448 | 1276 | 6,6 | 56 | 308 | 1,1 | 0,10 |
| 4 | 1363 | 188 | 448 | 1276 | 11,2 | 47 | 329 | 0,7 | 0,16 |
| 5 | 1292 | 285 | 448 | 1276 | 16,7 | 58 | 272 | 1,0 | 0,15 |

**Tabelle 2**

| SiO₂/TiO₂-Mischoxide | | | | | | | | | |
|---|---|---|---|---|---|---|---|---|---|
| Nr. | TiCl₄ (g/h) | SiCl₃ (g/h) | H₂ (l/h) | Luft (l/h) | SiO₂ (%) | BET (m²/g) | Stampfdichte (g/l) | Glühverlust (%) | Chloridgehalt (%) |
| 6 | 268 | 17 | 236 | 1643 | 5,0 | 105 | 162 | 1,1 | 0,02 |
| 7 | 231 | 54 | 236 | 1643 | 16,5 | 112 | 151 | 0,9 | 0,02 |
| 8 | 1423 | 118 | 448 | 1276 | 6,5 | 47 | 287 | 1,3 | 0,13 |
| 9 | 1346 | 208 | 448 | 1276 | 9,5 | 49 | 274 | 1,0 | 0,09 |
| 10 | 1258 | 296 | 448 | 1276 | 16,5 | 48 | 258 | 1,2 | 0,06 |

## Patentansprüche

1. Flammenhydrolytisch hergestelltes Titandioxid-Mischoxid mit einer BET-Oberfläche von 10 bis 150 m²/g, welches 1 bis 30 Gew.-% Aluminiumoxid oder 1 bis 30 Gew.-% Siliciumdioxid als Bestandteil des Mischoxides enthält.

2. Verfahren zur Herstellung des flammenhydrolytisch hergestellten Titandioxid-Mischoxides nach Anspruch 1, dadurch gekennzeichnet, daß man wasserfreies Aluminiumchlorid oder Siliciumtetrachlorid verdampft, zusammen mit einem Intertgas, z. B. Stickstoff, in die Mischkammer eines bekannten Brenners überführt, dort mit Wasserstoff, Luft und gasförmigem Titantetrachlorid in einem derartigen Verhältnis, daß das entsprechend zusammengesetzte Al₂O₃/TiO₂-Mischoxid oder SiO₂/TiO₂-Mischoxid ergibt, vermischt, das 4-Komponentengemisch in einer Reaktionskammer verbrennt, danach das feste Titandioxid-Mischoxid von den gasförmigen Reaktionsprodukten abtrennt und gegebenenfalls in feuchter Luft von anhaftendem Chlorwasserstoff befreit.

3. Verwendung des flammenhydrolytisch hergestellten Titandioxid-Mischoxides nach Anspruch 1 zur Herstellung von Katalysatoren, Katalysatorträgern, Photokatalysatoren, Keramiken, Autolacken und kosmetischen Artikeln (insbesondere von Sonnenschutzmitteln) und als Hitzestabilisator in Siliconkautschuken.

## Claims

1. Titanium dioxide mixed oxide prepared by flame hydrolysis with a BET surface area of 10 to 150 m²/g, which contains 1 to 30 wt.% aluminium oxide or 1 to 30 wt.% silicon dioxide as a component of the mixed oxide.

2. Process for the preparation of the titanium dioxide mixed oxide prepared by flame hydrolysis according to claim 1, characterised in that anhydrous aluminium chloride or silicon tetrachloride is evaporated, transferred into the mixing chamber of a known burner together with an inert gas, e.g. nitrogen, mixed there with hydrogen, air and gaseous titanium tetrachloride in a ratio such that the correspondingly composed Al₂O₃/TiO₂ mixed oxide or SiO₂/TiO₂ mixed oxide results, the 4-component mixture is burnt in a reaction chamber, the solid titanium dioxide mixed oxide is then separated off from the gaseous reaction products and optionally freed from adhering hydrogen chloride in moist air.

3. Use of the titanium dioxide mixed oxide prepared by flame hydrolysis according to claim 1 for the preparation of catalysts, catalyst supports, photocatalysts, ceramics, automotive coatings and cosmetic articles (especially sun screens) and as a heat stabiliser in silicone rubbers.

## Revendications

1. Oxyde mixte de dioxyde de titane fabriqué par hydrolyse de flamme présentant une surface BET comprise entre 10 et 150 m²/g et qui contient 1 à 30 % en poids d'oxyde d'aluminium ou 1 à 30 % en poids de dioxyde de silicium comme composant de l'oxyde mixte.

2. Procédé pour la fabrication de l'oxyde mixte à base de dioxyde de titane fabriqué par hydrolyse de flamme selon la revendication 1, caractérisé en ce qu'on évapore du chlorure d'aluminium ou du tétrachlorure de silicium anhydre, en ce qu'on le transfère, avec un gaz inerte tel que par exemple de l'azote, dans la chambre de carburation d'un brûleur connu, en ce qu'on l'y mélange avec de l'hydrogène, de l'air et du chlorure de titane gazeux dans un rapport tel qu'on obtient un oxyde mixte à base de Al₂O₃/TiO₂ ou de SiO₂/TiO₂ de composition correspondante, en ce qu'on mélange, en ce qu'on brûle le mélange à 4 composants dans une chambre de réaction, en ce qu'on sépare ensuite l'oxyde mixte à base de dioxyde de titane des produits de réaction gazeux et, le cas échéant, du chlorure d'hydrogène qui y adhère dans de l'air humide.

3. Utilisation de l'oxyde mixte de dioxyde de titane fabriqué par hydrolyse de flamme selon la revendication 1 pour la fabrication de catalyseurs, de supports de catalyseurs de photocatalyseurs, de céramiques, de laques de voiture et d'articles cosmétiques, (en particulier comme absorbants de rayons UV dans des produits de protection contre le soleil) et comme stabilisateur de chaleur dans les caoutchoucs de silicone.
